(19) **Europäisches Patentamt European Patent Office Office européen des brevets**

(11) **EP 0 857 964 B1**

(12) **FASCICULE DE BREVET EUROPEEN**

(45) Date de publication et mention de la délivrance du brevet:
**12.03.2008 Bulletin 2008/11**

(51) Int Cl.:
***G01N 21/35*** *(2006.01)*

(21) Numéro de dépôt: **98200225.5**

(22) Date de dépôt: **27.01.1998**

(54) **Procédé et dispositif de détermination d'une concentration d'un volume de gaz**

Verfahren und Vorrichtung zur Messung von Gaskonzentrationen

Method and apparatus for determining gas concentration

(84) Etats contractants désignés:
**AT BE DE DK ES FR GB IT NL PT SE**

(30) Priorité: **31.01.1997 FR 9701198**

(43) Date de publication de la demande:
**12.08.1998 Bulletin 1998/33**

(73) Titulaire: **Actaris S.A.S.**
**92100 Boulogne-Billancourt (FR)**

(72) Inventeurs:
• **Bazin, Alain**
**94800 Villejuif (FR)**

• **Grasdepot, François**
**92260 Fontenay aux Roses (FR)**
• **Silveira, Juan-Pedro**
**28014 Madrid (ES)**

(74) Mandataire: **Feray, Valérie et al**
**Feray Lenne Conseil**
**39/41, avenue Aristide Briand**
**92163 Antony (FR)**

(56) Documents cités:
**EP-A- 0 337 054          EP-A- 0 467 581**
**EP-A- 0 608 049          EP-A- 0 670 487**
**US-A- 4 755 665**

EP 0 857 964 B1

**Description**

L'invention est relative à un procédé et à un dispositif de détermination d'une concentration d'un volume de gaz.

On connaît un tel dispositif, comme divulgué par exemple dans le document EP 0 467 581, qui comprend une source de rayonnement électromagnétique qui est par exemple une source optique. Cette source est par exemple une lampe à infrarouge émettant un rayonnement de longueur d'onde λ0. Cette longueur d'onde correspond à l'une des raies d'absorption du gaz considéré. La source de rayonnement présente une répartition spectrale dans une plage de longueurs d'onde encadrant la valeur λ0.

Le dispositif comprend également une cellule contenant un volume de gaz de concentration donnée. Le rayonnement issu de la lampe traverse la cellule et est absorbé sélectivement par le gaz. En sortie de la cellule, le rayonnement présente une densité spectrale modifiée par la présence de pics d'absorption dûs au raies du gaz.

Un filtre, accordable en longueur d'onde, est réglé sur la longueur d'onde λ0 et est modulé temporellement de façon à ce que sa transmission spectrale varie en fonction de la longueur d'onde et du temps. Ce filtre modulé reçoit le rayonnement ayant traversé le volume de gaz et fournit en réponse une modulation temporelle de l'énergie de ce rayonnement. Un dispositif similaire est connu de EP 0 670 487 où le rayonnement optique est directement modulé en longueur d'onde. Un détecteur tel que par exemple un bolomètre reçoit l'énergie transmise par le filtre, intègre sur toute la largueur spectrale de la source l'énergie reçue et fournit une réponse moyenne qui ne dépend plus de la longueur d'onde λ du rayonnement mais qui dépend notamment de la concentration du gaz, et cette réponse peut s'exprimer de la façon suivante :

$$E(c,t) = [ \, Sac(c,t) + Sdc \, (c) \, ] \, P + Oac(t) + Odc.$$

Les valeurs de Sac(c,t) et Sdc correspondent respectivement à la modulation temporelle et à la valeur moyenne de l'intégrale, sur tout le domaine spectral de la source, du bilan d'énergie entre la source et le détecteur, à travers le filtre accordable en longueur d'onde et le gaz qui présente une bande d'absorption spectrale sur le domaine considéré.

Le terme P est un coefficient de pertes optiques inconnu et variable qui tient compte par exemple de l'empoussièrage du dispositif considéré.

Le terme Oac(t) + Odc est un décalage de zéro dû principalement au détecteur et il se présente sous la forme de deux termes correspondant respectivement à une partie variable avec le temps, $O_{ac}(t)$, et une partie non variable avec le temps $O_{dc}$.

Or, dans ce type de dispositif, l'influence du coefficient de pertes optiques P et des dérives du détecteur empêchent de déterminer de manière fiable la concentration du gaz.

Il serait par conséquent très intéressant de pouvoir compenser le coefficient de pertes optiques P et les dérives du détecteur en vue d'obtenir de manière plus fiable la concentration du gaz.

La présente invention propose un procédé et un dispositif de détermination de la concentration d'un gaz qui permettent d'atteindre de façon simple ce but.

La présente invention a ainsi pour objet un procédé de détermination d'une concentration d'un volume de gaz selon lequel :

- on émet (état 1) un rayonnement électromagnétique à travers le volume de gaz,
- on filtre ledit rayonnement en modulant temporellement la transmission spectrale dudit filtre afin d'obtenir une modulation temporelle de l'énergie du rayonnement transmise par le volume de gaz et par ce filtre,
- on détecte cette énergie modulée temporellement et l'on en extrait un signal E qui dépend notamment de la concentration du gaz, caractérisé en ce que ;
- on isole la composante $E_{ac}(1)$ du signal qui varie avec le temps,
- on isole la composante $E_{dc}(1)$ du signal qui ne varie pas avec le temps,
- on cesse d'émettre un rayonnement (état 0) et,
- on isole la composante $E_{ac}(0)$ du signal reçu par le détecteur,
- on isole la composante $E_{dc}(0)$ de ce signal,
- on calcule les termes $E_{ac}(1) - E_{ac}(0)$ et $E_{dc}(1) - E_{dc}(0)$,
- on forme le rapport $(E_{ac}(1) - E_{ac}(0)) / (E_{dc}(1) - E_{dc}(0))$ qui est alors uniquement fonction de la concentration c de gaz et l'on en déduit c,

Selon une autre caractéristique de l'invention, le rayonnement électromagnétique est de type optique.

La présente invention a également pour objet un dispositif de détermination d'une concentration d'un volume de gaz comprenant d'amont en aval :

- au moins une source émettant un rayonnement électromagnétique à travers le volume de gaz,
- un filtre accordable en longeur d'onde et dont la transmission spectrale est variable en fonction de la longeur d'onde et du temps,
- un détecteur qui, en fonction de l'énergie du rayonnement ayant traversé le volume de gaz et le filtre, produit un signal E dépendant notamment de la concentration du gaz, caractérisé en ce que ledit dispositif comprend :
- des moyens pour isoler la composante $E_{ac}$ du signal qui varie avec le temps respectivement lorsque la source est allumée (état 1) et éteinte (état 0) et,
- des moyens pour isoler la composante $E_{dc}$ du signal qui ne varie pas avec le temps respectivement lorsque la source est allumée (état 1) et éteinte (état 0),
- des moyens pour calculer les termes $E_{ac}(1) - E_{ac}(0)$ et $E_{dc}(1) - E_{dc}(0)$, former le rapport $(E_{ac}(1) - E_{ac}(0)) / (E_{dc} 1) - E_{dc}(0))$ qui est alors uniquement fonction de la concentration c du gaz et en déduire c.

Selon d'autres caractéristiques de l'invention :

- les moyens pour isoler la composante $E_{ac}$ du signal sont formés par un amplificateur à démodulation synchrone,
- les moyens pour isoler la composante $E_{ac}$ du signal sont formés par un filtre passe-haut,
- les moyens pour isoler la composante $E_{dc}$ du signal sont formés par un amplificateur différentiel suivi d'un filtre passe-bas, et par des circuits adaptateurs d'impédance reliés aux entrées inverseuse et non inverseuse dudit amplificateur,
- les moyens pour isoler la composante $E_{dc}$ du signal sont formés par un amplificateur différentiel d'instrumentation suivi d'un filtre passe-bas,
- le rayonnement électromagnétique est de type optique,
- le filtre est un interféromètre de Fabry-Pérot.

D'autres caractéristiques et avantages apparaîtront à la lumière de la description qui va suivre, donnée uniquement à titre d'exemple non limitatif, et faite en référence aux dessins annexés, sur lesquels :

- la figure 1 est une vue schématique d'un dispositif de détermination d'une concentration de gaz,
- la figure 2 est une vue schématique en coupe d'un exemple de filtre utilisé dans le dispositif selon l'invention,
- les figures 2c-h représentent les transmissions spectrales du filtre, du gaz et leur produit pour deux positions distinctes du filtre accordable,
- la figure 2i représente la modulation temporelle de la tension appliquée au filtre,
- la figure 2j indique l'allure de l'énergie E mesurée par le détecteur 18 en fonction du temps,
- la figure 3 est une vue du dispositif de détermination selon l'invention,
- les figures 3a et 3b sont des vues partielles représentant des variantes de réalisation du dispositif de la figure 3.

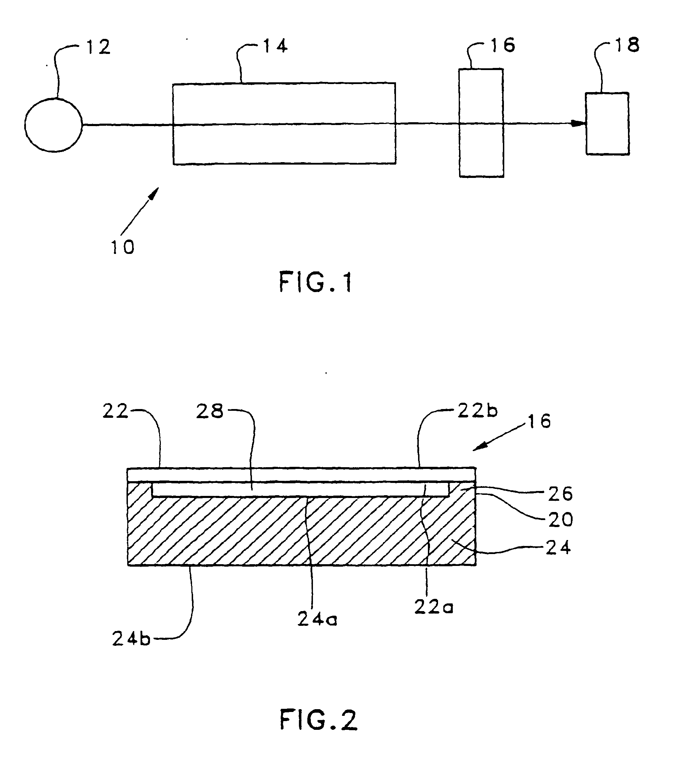

Comme représenté sur la figure 1 par la référence générale notée 10, un dispositif de détermination de la concentration d'un gaz tel que le méthane comprend une source de rayonnement électromagnétique 12 qui est par exemple une source optique.

Il peut s'agir d'une source spectrale du type lampe à incandescence ou corps noir, et par exemple, la lampe commercialisée par la société Royal Hamai sous la référence CNS-BP44X.

La source 12 est une lampe à infrarouge émettant un rayonnement de longueur d'onde λ0 = 3,35 μm, longueur d'onde qui correspond à une des raies d'absorption du méthane. La source présente une répartition spectrale dans la plage de longueurs d'onde allant de 2 à 4 μm.

Le spectre émis par la lampe passe à travers un volume de gaz contenu dans une cellule 14. La transmission spectrale dûe au gaz présente une bande d'absorption dans le domaine spectral de la lampe et dépend donc de la concentration du gaz dans la cellule.

Un filtre 16 accordable en longueur d'onde est modulé temporellement par exemple par un signal de fréquence fixe égale à 819Hz, et la transmission optique de ce filtre est variable en fonction de la longueur d'onde et du temps.

Un détecteur 18, qui peut par exemple être un bolomètre, reçoit l'énergie modulée temporellement du rayonnement issu de la lampe et ayant traversé la cellule de gaz ainsi que le filtre 16.

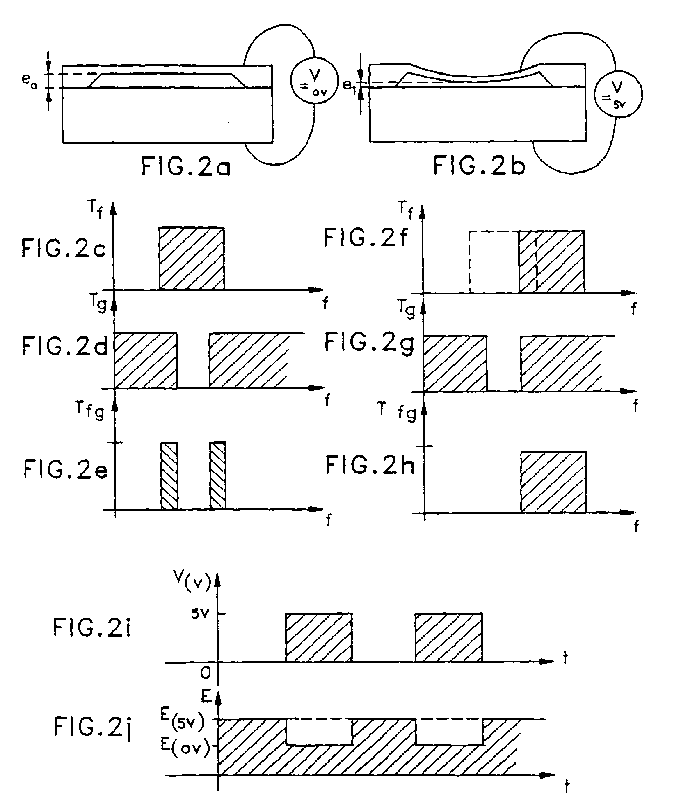

Comme représenté à la figure 2, le filtre 16 de la figure 1 est constitué par un corps 20 qui comprend une première portion formée par une membrane 22 de forme sensiblement circulaire. Le corps comprend également une deuxième portion 24 formant support de forme générale sensiblement cylindrique. La membrane 22 est fixée au support 24 par l'intermédiaire d'un rebord périphérique 26 du support 24. La membrane 22 et le support 24 possèdent deux surfaces, respectivement 22a, 24a en regard l'une de l'autre et qui définissent entre elles une cavité 28 d'épaisseur $e_0$. Ces surfaces sont sensiblement planes et parallèles entre elles. Par exemple, la cavité 28 contient un milieu qui ne présente pas d'interférence spectrale avec le gaz dont on cherche à déterminer la concentration. Le milieu est par exemple de l'argon ou un autre gaz neutre voire même un liquide. La cavité peut également être mise sous vide. La membrane 22 est mobile par rapport au support 24 dans une direction qui est perpendiculaire au couple de surfaces en regard 22a, 24a. Le rayonnement optique qui présente une répartition spectrale est représenté par une flèche verticale dirigée vers la membrane 22. Le corps 20 est transparent au rayonnement optique choisi et est par exemple réalisé en silicium. Un tel filtre peut par exemple être obtenu de la manière indiquée dans le document EP 0 608 049 pour ce qui concerne les principales étapes de fabrication.

Ce filtre est un interféromètre de type Fabry Pérot dont l'épaisseur initiale $e_0$ est par exemple ajustée en fonction de la raie d'absorption du gaz considéré.

Ainsi, lorsque la tension appliquée au filtre est nulle, la transmission spectrale du filtre est par exemple centrée initialement sur la raie d'absorption du gaz (épaisseur $e_0$), comme représenté sur la figure 2a.

La transmission du filtre peut être accordée en longeur d'onde dans une autre position spectrale (Fig.2b) (épaisseur e1) en appliquant une tension qui est modulée temporellement à la fréquence de 819Hz entre deux valeurs extrêmes correspondant à ces deux positions.

Les figures 2c-e (resp.2d-h) montrent respectivement les courbes de transmission spectrale en fréquence du filtre 16 (Fig2c, resp.2f), du volume de gaz 14 (Fig2d, resp.2g) et le produit desdites transmissions spectrales (Fig2e, resp.2h) pour la position du filtre indiquée sur la figure 2a (resp.2b).

Comme représenté sur les figures 2c et 2d, la transmission spectrale du filtre est accordée sur la bande d'absorption du gaz.

La figure 2f indique en pointillés la transmission spectrale du filtre avant déplacement de la membrane mobile, ainsi que représentée sur la figure 2c.

La figure 2i représente les variations temporelles de la tension appliquée au filtre 16 dont les transmissions spectrales varient entre celle indiquée sur la figure 2c (à 0V)et celle de la figure 2f (5V) et la figure 2j représente les variations temporelles de la valeur E mesurée par le détecteur 18. Un générateur de fréquences (non représenté sur les figures) délivre à partir d'une horloge à quartz de fréquence égale à 32 kHz un signal carré de fréquence égale à 819Hz obtenu respectivement en effectuant une division par 10 et par 4 du signal de l'horloge mère à 32kHz.

Le détecteur 18 et sa résistance de charge (non représentée) sont alimentés par une tension continue + $V_{dc}$ (ex + 5V) et le détecteur délivre en sortie l'énergie E(c,t) qui s'exprime sous la forme :

$$E(c,t) = [ S_{ac}(c,t) + S_{dc}(c) ] \, iP + O_{ac}(t) + O_{dc}$$

où

- c désigne la concentration du gaz,
- $S_{ac}$ et $S_{dc}$ correspondent respectivement à la modulation temporelle et à la valeur moyenne de l'intégrale, sur tout le domaine spectral de la source, du bilan d'énergie entre la source 12 et le détecteur 18, à travers le filtre 16 accordable en longueur d'onde et la cellule de gaz 14,
- i est un paramètre booléen valant 1 si la source 12 est allumée et 0 si la source est éteinte,
- P est un coefficient de pertes optiques inconnu et variable qui tient compte par exemple de l'empoussièrage du dispositif considéré.
- $O_{ac}(t) + O_{dc}$ est un décalage de zéro dû principalement au détecteur 18 et qui se présente sous la forme de deux termes correspondant respectivement à une partie variable avec le temps, $O_{ac}(t)$, et une partie non variable avec le temps $O_{dc}$.

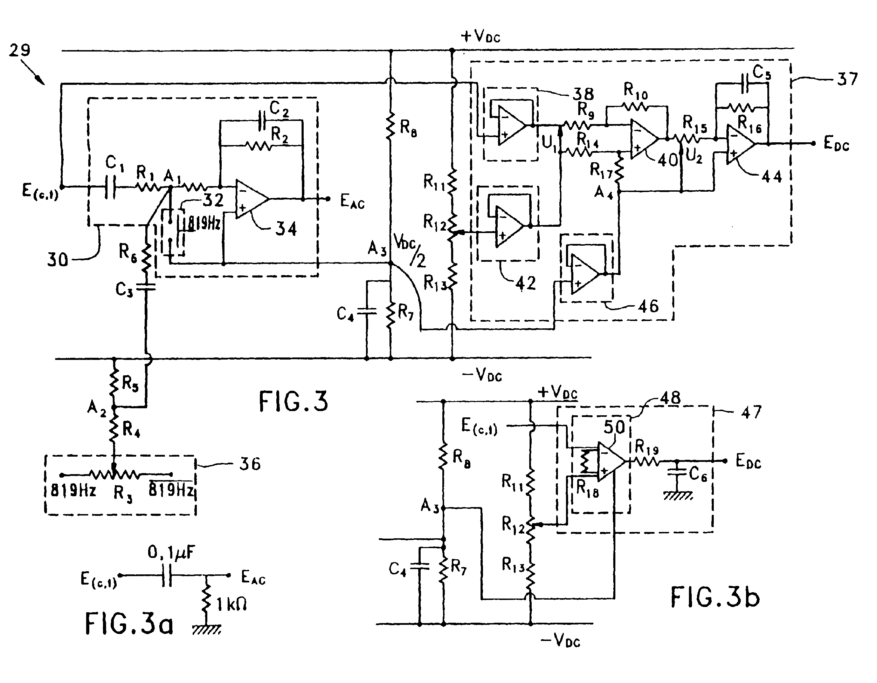

Le signal E(c,t) est représenté sur la partie gauche de la figure 3 qui montre une partie 29 du dispositif 10 de détermination de la concentration de gaz selon l'invention.

Cette figure décrit des moyens qui permettent d'isoler respectivement les composantes variant avec le temps $E_{ac}$ et ne variant pas avec le temps $E_{dc}$ du signal E(c,t). Les moyens permettant d'isoler la composante $E_{ac}$ du signal E(c,t) sont par exemple constitués par un amplificateur à démodulation synchrone 30.

L'amplificateur à démodulation synchrone 30 comprend en entrée une capacité C1 arrêtant les signaux qui ne varient pas avec le temps et une résistance R1. Un interrupteur 32 commandé par la fréquence de synchronisation du filtre 16 (819Hz) est par exemple réalisé par un circuit CMOS de série 4066 et permet ainsi par démodulation du signal E(c,t) de faire apparaître en sortie de l'amplificateur différentiel 34 la composante $E_{ac}$ de ce signal.

Un filtre passe-bas constitué d'une résistance R2 en parallèle avec une capacité C2 est disposé entre l'entrée inverseuse et la sortie de l'amplificateur 34 afin de filtrer les résidus de l'opération de démodulation.

A titre de variante du montage ci-dessus décrit, dans le cas où le signal issu du détecteur est peu affecté par le bruit, les moyens d'isolation de la composante $E_{ac}$ du signal E(c,t) peuvent également être formés plus simplement par un filtre passe-haut classique constitué par exemple par une capacité de valeur égale à $0{,}1\mu F$ et une résistance de valeur égale à $1k\Omega$, comme représenté sur la figure 3a.

Pour annuler le décalage du zéro produit par le démodulateur en l'absence d'énergie reçue par le détecteur 18 on utilise un montage potentiométrique 36 constitué d'une résistance R3 variable recevant à ses bornes le signal à 819Hz et son inverse.

En déplaçant le curseur sur la résistance R3 on peut régler le décalage du zéro en ajustant l'amplitude et la phase du signal dit de décalage qui va être injecté sur le point A1.

Le montage constitué des résistances R4, R5 en série dans lequel la résistance R5 est reliée à la source de tension - $V_{dc}$ forme un atténuateur qui sert à affiner le réglage du zéro.

Une capacité C3 en série avec une résistance R6 relient le point A2 situé entre les résistances R4, R5 et le point A1 et forment un circuit d'injection du signal de décalage qui arrête la composante continue de ce signal.

La composante $E_{ac}$ évolue par rapport à un point de référence A3 qui constitue une masse fictive. La tension en ce point par rapport à la masse est $V_{dc}/2$.

Une capacité C4 reliée à une extrémité, à la source de tension - $V_{dc}$ et à l'extrémité opposée au point A3 et la résistance équivalente du pont diviseur R7, R8 créent un découplage du bruit provenant de l'interrupteur 32 afin que ce bruit ne se retrouve pas en sortie de l'amplificateur 34.

Des moyens 37 permettant d'isoler la composante $E_{dc}$ du signal E(c,t) qui ne varie pas avec le temps vont maintenant être décrits.

Le signal E(c,t) provenant du détecteur 18 est envoyé sur un circuit adaptateur d'impédance 38 réalisé par un amplificateur différentiel utilisé dans un montage dit suiveur, permettant ainsi de diminuer l'impédance offerte audit signal E(c,t).

Une résistance R9 relie la sortie du circuit 38 à l'entrée inverseuse d'un amplificateur différentiel 40 et une résistance R10 relie ladite entrée inverseuse à la sortie de cet amplificateur.

Trois résistances R11, R12 et R13 sont montées en série entre les sources de tension respectives $+V_{dc}$, $-V_{dc}$.

La résistance R12 est variable et, par un déplacement du curseur du montage potentiométrique ainsi réalisé, il est possible de régler le décalage du zéro du signal $E_{dc}$ qui va être obtenu.

Les résistances R11 et R13 qui encadrent la résistance R12 servent à affiner le réglage du zéro.

Il est prévu un autre circuit adaptateur d'impédance 42 réalisé par un amplificateur différentiel utilisé dans un montage suiveur, l'entrée non inverseuse dudit amplificateur étant reliée à la résistance variable R12.

Ce circuit 42 a pour fonction de de diminuer l'impédance du pont diviseur R11, R12,R13 vue du curseur du potentiomètre R12.

La sortie du circuit 42 est reliée à l'entrée non inverseuse de l'amplificateur 40 par l'intermédiaire d'une résistance R14.

La sortie de l'amplificateur 40 est reliée à l'entrée inverseuse d'un amplificateur opérationel 44 qui a pour fonction d'augmenter le niveau du signal de sortie $E_{dc}$.

Un filtre passe-bas constitué d'une capacité C5 en parallèle avec une résistance R 16 est monté entre l'entrée inverseuse de l'amplificateur 44 et sa sortie afin de filtrer le bruit présent dans le signal $E_{dc}$.

Un circuit adaptateur d'impédance 46 réalisé par un amplificateur différentiel utilisé dans un montage suiveur est prévu de telle sorte que l'entrée non inverseuse dudit amplificateur est reliée au point A3 et la sortie de celui-ci est relié au point A4. Une résistance R17 est disposée entre le point A4 et l'entrée non inverseuse de l'amplificateur 44.

Ce circuit 46 permet d'éviter de réinjecter des courants sur le point de référence A3 qui introduiraient une perturbation dans la mesure de la composante Eac.

La tension U1 appliquée entre les deux branches qui arrivent respectivement sur les entrées inverseuse et non inverseuse de l'amplificateur 40 se retrouve en sortie de cet amplificateur entre la branche portant la résistance R15 et le point A4.

Ceci est rendu possible grâce à l'appairage des résistances R9, R14, R10 et R17.

On obtient ainsi en sortie du montage 37 la composante $E_{dc}$ du signal E(c,t) qui est invariable dans le temps.

Une variante représentée à la figure 3b montre des moyens 47 pour isoler la composante $E_{dc}$ du signal E(c,t) qui sont formés par un amplificateur différentiel d'instrumentation 46 constitué d'un amplificateur différentiel 50 équipé entre ses deux entrées d'une résistance R18, recevant sur son entrée inverseuse le signal E(c,t) et ayant son entrée non inverseuse reliée au montage potentiométrique utilisant la résistance variable R12.

Cet amplificateur est alimenté par la tension prise au point A3 ($V_{dc}/2$) et présente de par nature un taux élevé de réjection de mode commun.

Un tel amplificateur est par exemple commercialisé par la société ANALOG DEVICES sous la référence AD620.

En sortie de cet amplificateur un filtre passe-bas classique constitué d'une résistance R19 et d'une capacité C6 est prévu afin de filtrer les composantes indésirables qui varient avec le temps.

Dans la suite de l'exposé le procédé de détermination de la concentration de gaz selon l'invention va maintenant être décrit.

Lorsque la source de rayonnement optique 12 est éteinte, le paramètre booléen i dans l'expression de l'énergie reçue par le détecteur 18 vaut 0 et l'énergie E(c,0) est alors égale au terme Oac(0) + Odc correspondant à la dérive du détecteur.

Grâce aux moyens 30 et 37 décrits précédemment en référence aux figures 3 et 3a-b, les composantes variant avec le temps $E_{ac}$ et ne variant pas avec le temps $E_{dc}$ peuvent être séparées.

Ainsi, les moyens 30 délivrent en sortie la composante $E_{ac}(0)$ qui est égale à la partie $O_{ac}$ du terme $O_{ac}(0)$ + $O_{dc}$ en l'absence d'éclairage.

Cette valeur est une constante qui est stockée dans une mémoire vive non représentée sur les figures. Les moyens 37, quant à eux, fournissent en sortie la composante $E_{dc}(0)$ qui est égale à la partie $O_{dc}$ du terme $O_{dc}(0)$ + $O_{dc}$ en l'absence d'éclairage.

Ensuite, la source 12 est allumée, le paramètre booléen i vaut alors 1 et l'énergie E(c,t) est égale au terme $[S_{ac}(c,t) + S_{dc}(c)] P + O_{ac}(t) + O_{dc}$.

Il convient de noter que le procédé selon l'invention s'applique quelque soit le sens du changement d'état du paramètre i (passage de l'état 0 à 1 ou 1 à 0).

Les moyens 30 et 37 permettent respectivement d'isoler les composantes $E_{ac}(1)$ et $E_{dc}(1)$.

$$Eac(1) = S_{ac}(c).P + O_{ac}(0)$$

soit

$$Eac(1) = S_{ac}(c).P + E_{ac}(0)$$

et

$$Edc(1) = Sd_c(c).P + O_{dc}$$

soit

$$Edc(1) = S_{dc}(c).P + E_{dc}(0)$$

De même, les valeurs $E_{ac}(1)$ et $E_{dc}(1)$ sont stockées dans une mémoire vive non représentée.

Il convient de noter que le rapport $E_{ac}/E_{dc}$ n'est pas stable sous l'effet de deux influences :

- l'influence des pertes optiques P dont les changements ont lieu à long terme, et
- l'influence de la dérive des termes Oac(t) et Odc avec les paramètres d'environnement tels que la température et dont les changements ont lieu à moyen terme.

Par conséquent, il est essentiel que le passage de l'état éteint (0) à l'état (1) et que les différentes étapes de mesure des valeurs Eac(0), Edc(0), Eac(1) et Edc(1) soient effectués dans un laps de temps suffisamment court devant la période des variations du rapport Eac/Edc pour que le procédé selon l'invention s'applique.

Un microprocesseur de type connu calcule les termes $E_{ac}(1)-E_{ac}(0)$ et $E_{dc}(1)-E_{dc}(0)$ et effectue le rapport de ces termes ce qui donne :

$$R(c) = [E_{ac}(1) - E_{ac}(0).] / [E_{dc}(1) - E_{dc}(0).] = S_{ac}(c) / S_{dc}(c)$$

R(c) est donc une fonction qui ne dépend que de la concentration de gaz c.

En effectuant au préalable une calibration de R(c) pour différentes valeurs de la concentration c, on déduit par interpolation linéaire la valeur de la concentration c du gaz à partir de la valeur déterminée pour R(c).

La fonction R(c) est indépendante des pertes sur le trajet optique (poussières...) et des décalages de zéro qui sont inévitables dans la chaîne de mesure. La réalisation d'un dispositif de détermination de la concentration c d'un gaz (détecteur de gaz) stable à moyen et long terme est donc possible en déterminant c de la façon décrite ci-dessous.

Afin d'obtenir de meilleurs résultats il est envisagé de choisir et de dimensionner de façon appropriée le filtre accordable 16 et sa modulation.

**Revendications**

1. Procédé de détermination d'une concentration d'un volume de gaz (14) selon lequel,

   - on émet (état 1) un rayonnement électromagnétique à travers le volume de gaz,
   - on filtre ledit rayonnement en modulant temporellement la transmission spectrale dudit filtre (16) afin d'obtenir une modulation temporelle de l'énergie du rayonnement transmise par le volume de gaz et par ce filtre,
   - on détecte cette énergie modulée temporellement et l'on en extrait un signal E qui dépend notamment de la concentration du gaz,

   **caractérisé en ce que** ;

   - on isole la composante $E_{ac}(1)$ du signal qui varie avec le temps,
   - on isole la composante $E_{dc}(1)$ du signal qui ne varie pas avec le temps,
   - on cesse d'émettre un rayonnement (état 0) et,
   - on isole la composante $E_{ac}(0)$ du signal reçu par le détecteur,
   - on isole la composante $E_{dc}(0)$ de ce signal,
   - on calcule les termes $E_{ac}(1) - E_{ac}(0)$ et $E_{dc}(1) - E_{dc}(0)$,
   - on forme le rapport $(E_{ac}(1) - E_{ac}(0)) /(E_{dc}(1) - E_{dc}(0))$ qui est alors uniquement fonction de la concentration c de gaz et l'on en déduit c.

2. Procédé selon la revendication 1, selon lequel le rayonnement électromagnétique est de type optique.

3. Dispositif (10) de détermination d'une concentration d'un volume de gaz (14) comprenant d'amont en aval :

   - au moins une source (12) émettant un rayonnement électromagnétique à travers le volume de gaz,
   - un filtre (16) accordable en longueur d'onde et dont la transmission spectrale est variable en fonction de la longueur d'onde et du temps,
   - un détecteur (18) qui, en fonction de l'énergie du rayonnement ayant traversé le volume de gaz et le filtre, produit un signal dépendant notamment de la concentration du gaz, **caractérisé en ce que** ledit dispositif comprend :
   - des moyens (30) pour isoler la composante $E_{ac}$ du signal qui varie avec le temps respectivement lorsque la source est allumée (état 1) et éteinte (état 0) et,
   - des moyens (38, 40, 42 ; 48, R19, C6) pour isoler la composante $E_{dc}$ du signal qui ne varie pas avec le temps respectivement lorsque la source est allumée (état 1) et éteinte (état 0),
   - des moyens pour calculer les termes $E_{ac}(1) - E_{ac}(0)$ et $E_{dc}(1) - E_{dc}(0)$, former le rapport $(E_{ac}(1) - E_{ac}(0)) / (E_{dc}(1) - E_{dc}(0))$ qui est alors uniquement fonction de la concentration c du gaz et en déduire c.

4. Dispositif selon la revendication 3, dans lequel les moyens pour isoler la composante $E_{ac}$ du signal sont formés par un amplificateur à démodulation synchrone (30).

5. Dispositif selon la revendication 3, dans lequel les moyens pour isoler la composante $E_{ac}$ du signal sont formés par un filtre passe-haut.

6. Dispositif selon la revendication 3, dans lequel les moyens pour isoler la composante $E_{dc}$ du signal sont formés par un amplificateur différentiel (40) suivi d'un filtre passe-bas (C5, R16) et par des circuits adaptateurs d'impédance (38, 42) reliés aux entrées inverseuse et non inverseuse dudit amplificateur.

7. Dispositif selon la revendication 3, dans lequel les moyens pour isoler la composante $E_{dc}$ du signal sont formés par un amplificateur différentiel d'instrumentation (48) suivi d'un filtre passe-bas (R19, C6).

8. Dispositif selon l'une des revendications 3 à 7, dans lequel le rayonnement électromagnétique est de type optique.

9. Dispositif selon l'une des revendications 3 à 8, dans lequel le filtre (16) est un interféromètre de Fabry-Pérot.

**Claims**

1. A method of determining a concentration of a volume of gas (14) in which:

   electromagnetic radiation is emitted (state 1) through the volume of gas;
   - said radiation is filtered by modulating the spectral transmission of said filter (16) over time in order to obtain time modulation of the energy of the radiation transmitted through the volume of gas and the filter;
   · this time-modulated energy is detected and a signal E is extracted therefrom that depends in particular on the concentration of the gas;

   the method being **characterized in that**:

   the time-varying component $E_{ac}(1)$ of the signal is isolated:
   . the non time-varying component $E_{dc}(1)$ of the signal is isolated;
   · radiation ceases to be emitted (state 0);
   · the component $E_{ac}(0)$ of the signal received by the detector is isolated;
   · the component $E_{dc}(0)$ of said signal is isolated;
   · the terms $E_{ac}(1)$-$E_{ac}(0)$ and $E_{dc}(1)$-$E_{dc}(0)$ are calculated; and
   · the ratio

   $$\left( \frac{E_{ac}(1) \quad - \quad E_{ac}(0)}{E_{dc}(1) \quad - \quad E_{dc}(0)} \right)$$

   is formed, which ratio is then a function solely of the concentration $\underline{c}$ of the gas, and $\underline{c}$ is deduced therefrom.

2. A method according to claim 1, in which the electromagnetic radiation is of optical type.

3. A device (10) for determining a concentration of a volume of gas (14), the device comprising from upstream to downstream:

   · at least one source (12) emitting electromagnetic radiation through the volume of gas;
   . a wavelength-tunable filter (16) of spectral transmission that is variable as a function of wavelength and as a function of time;
   .a detector (18) that, as a function of the energy of the radiation that has passed through the volume of gas and the filter, produces a signal that depends in particular on the concentration of the gas; the device being **characterized in that** it comprises:
   · means (30) for isolating the time-varying component $E_{ac}$ of the signal respectively when the source is on (state 1) and off (state 0);
   · means (38, 40, 42; 48, R19, C6) for isolating the non time-varying component $E_{dc}$ of the signal respectively when the source is on (state 1) and off (state 0); and
   -means for calculating the terms $E_{ac}(1)$-$E_{ac}(0)$ and $E_{dc}(1)$-$E_{dc}(0)$, for forming the ratio:

   $$\left( \frac{E_{ac}(1) \quad - \quad E_{ac}(0)}{E_{dc}(1) \quad - \quad E_{dc}(0)} \right)$$

   which ratio is then a function solely of the concentration $\underline{c}$ of the gas, and for deducing $\underline{c}$ therefrom.

4. A device according to claim 3, in which the means for isolating the signal component $E_{ac}$ are formed by a synchronous demodulation amplifier (30).

5. A device according to claim 3, in which the means for isolating the signal component $E_{ac}$ are formed by a high-pass filter.

**6.** A device according to claim 3, in which the means for isolating the signal component $E_{dc}$ are formed by a differential amplifier (40) followed by a low-pass filter (C5, R16), and by impedance-matching circuits (38, 42) connected to the inverting and non-inverting inputs of said amplifier.

**7.** A device according to claim 3, in which the means for isolating the signal component $E_{dc}$ are formed by an instrumentation differential amplifier (48) followed by a low-pass filter (R19, C6).

**8.** A device according to any one of claims 3 to 7, in which the electromagnetic radiation is of the optical type.

**9.** A device according to any one of claims 3 to 8, in which the filter (16) is a Fabry-Perot interferometer.

**Patentansprüche**

**1.** Verfahren zum Bestimmen einer Konzentration eines Gasvolumens (14), bei welchem

  - man eine elektromagnetische Strahlung durch das Gasvolumen sendet (Zustand 1),
  - man die Strahlung filtert, wobei man vorübergehend die spektrale Durchlässigkeit des Filters (16) moduliert, um eine vorübergehende Modulation der Strahlungsenergie, die von dem Gasvolumen und diesem Filter übertragen wird, zu erzielen,
  - man diese vorübergehend moduliert Energie erfasst und aus ihr ein Signal E bildet, das insbesondere von der Konzentration des Gases abhängt, **dadurch gekennzeichnet, dass**
  - man die Komponente $E_{ac}(1)$ des Signals, die mit der Zeit variiert, isoliert,
  - man die Komponente $E_{dc}(1)$ des Signals, die nicht mit der Zeit variiert, isoliert,
  - man das Senden einer Strahlung (Zustand 0) stoppt, und
  - man die Komponente $E_{ac}(0)$ des von dem Detektor empfangenen Signals isoliert,
  - man die Komponente $E_{dc}(0)$ dieses Signals isoliert,
  - man die Glieder $E_{ac}(1) - E_{ac}(0)$ und $E_{dc}(1) - E_{dc}(0)$ berechnet,
  - man das Verhältnis $(E_{ac}(1) - E_{ac}(0)) / (E_{dc}(1) - E_{dc}(0))$ bildet, das dabei nur von der Gaskonzentration c abhängt, und man daraus c ableitet.

**2.** Verfahren nach Anspruch 1, bei dem die elektromagnetische Strahlung optische Strahlung ist.

**3.** Vorrichtung (10) zum Bestimmen einer Konzentration eines Gasvolumens (14), die folgendes in dieser Reihenfolge aufweist:

  - mindestens eine Quelle (12), die eine elektromagnetische Strahlung durch das Gasvolumen sendet,
  - ein Filter (16), das hinsichtlich der Wellenlänge eingestellt werden kann und dessen spektrale Durchlässigkeit in Abhängigkeit von der Wellenlänge und der Zeit variabel ist,
  - einen Detektor (18), der in Abhängigkeit von der Energie der Strahlung, die das Gasvolumen und das Filter durchquert hat, ein Signal erzeugt, das insbesondere von der Konzentration des Gases abhängt, **dadurch gekennzeichnet, dass** die Vorrichtung aufweist:
  - Mittel (30) zum Isolieren der Komponente $E_{ac}$ des Signals, die mit der Zeit variiert, jeweils wenn die Quelle eingeschaltet (Zustand 1) und ausgeschaltet (Zustand 0) wird, und
  - Mittel (38, 40, 42; 48, R19, C6) zum Isolieren der Komponente $E_{dc}$ des Signals, die mit der Zeit nicht variiert, jeweils wenn die Quelle eingeschaltet (Zustand 1) und ausgeschaltet (Zustand 0) wird,
  - Mittel zum Berechnen der Glieder $E_{ac}(1) - E_{ac}(0)$ und $E_{dc}(1) - E_{dc}(0)$, Erstellen des Verhältnisses $(E_{ac}(1) - E_{ac}(0)) / E_{dc}(1) - E_{dc}(0))$, das dabei nur von der Konzentration c des Gases abhängt, und daraus Ableiten von c.

**4.** Vorrichtung nach Anspruch 3, bei der die Mittel zum Isolieren der Komponente $E_{ac}$ des Signals aus einem Verstärker mit synchroner Demodulation (30) gebildet sind.

**5.** Vorrichtung nach Anspruch 3, bei der die Mittel zum Isolieren der Komponente $E_{ac}$ des Signals aus einem Hochpassfilter gebildet sind.

**6.** Vorrichtung nach Anspruch 3, bei der die Mittel zum Isolieren der Komponente $E_{dc}$ des Signals aus einem Differenzverstärker (40) gefolgt von einem Tiefpassfilter (C5, R16) und Impedanzanpassungsschaltungen (38, 42), die mit den invertierenden und den nicht invertierenden Eingängen des Verstärkers verbunden sind, gebildet sind.

7.  Vorrichtung nach Anspruch 3, bei der die Mittel zum Isolieren der Komponente $E_{dc}$ des Signals aus einem Messdifferenzverstärker (48) gefolgt von einem Tiefpassfilter (R19, C6) gebildet sind.

8.  Vorrichtung nach einem der Ansprüche 3 bis 7, bei der die elektromagnetische Strahlung optische Strahlung ist.

9.  Vorrichtung nach einem der Ansprüche 3 bis 8, bei der das Filter (16) ein Fabry-Perot-Interferometer ist.

FIG.1

FIG.2

FIG.2a

FIG.2b

FIG.2c

FIG.2d

FIG.2e

FIG.2f

FIG.2g

FIG.2h

FIG.2i

FIG.2j

FIG.3

FIG.3a

FIG.3b

**RÉFÉRENCES CITÉES DANS LA DESCRIPTION**

**Documents brevets cités dans la description**

- EP 0467581 A
- EP 0670487 A
- EP 0608049 A